# EUROPEAN PATENT SPECIFICATION

(11) **EP 1 893 034 B1**
(45) Date of publication and mention of the grant of the patent: **23.05.2012**
(21) Application number: 06773633.0
(22) Date of filing: 20.06.2006
(51) Int. Cl.: A23F 5/46, A23F 5/50, A23L 1/22, A23L 1/234

(54) **PROCESSES FOR ISOLATING BITTER COMPOUNDS FOR USE IN FOOD AND BEVERAGE PRODUCTS**
VERFAHREN ZUR ISOLIERUNG BITTERER VERBINDUNGEN ZUR VERWENDUNG BEI NAHRUNGSMITTELN UND GETRÄNKEPRODUKTEN
METHODES DESTINEES A ISOLER DES COMPOSES AMERS UTILISABLES DANS DES PRODUITS ALIMENTAIRES OU A BOIRE

(30) Priority: 20.06.2005 US 156883
(43) Date of publication of application: 05.03.2008
(73) Proprietor: The Folgers Coffee Company, Cincinnati, OH 45224 (US)
(72) Inventor: ZEHENTBAUER, Gerhard, Norbert, Okeana, Ohio 45053 (US); BUNKE, Paul, Ralph, Cincinnati, Ohio 45248 (US); EKANAYAKE, Athula, Cincinnati, Ohio 45249 (US); YOUNG, Jerry, Douglas, Cincinnati, Ohio 45240 (US); FRANK, Oliver, 48149 Münster (DE); HOFMANN, Thomas, Frank, 48146 Münster (DE); BLUMBERG, Simone, 48149 Münster (DE)
(74) Representative: Cabinet Plasseraud
(86) International application number: PCT/US2006/024014
(87) International publication number: WO 2007/002112

(56) References cited:
- EP-A1- 0 687 661
- WO-A-86/01508
- WO-A1-02/100192
- GB-A- 2 089 639
- US-A- 3 100 224
- US-A- 5 401 858
- US-A1- 2003 013 758
- BENNAT, C.; ENGELHARDT, U. H.; KIEHNE, A.; WIRRIES, F-M.; MAIER, H. G.: "HPLC Analysis of chlorgenic acid lactones in roasted coffee" ZEITSCHRIFT FÜR LEBENSMITTELUNTERSUCHUNG UND -FORSCHUNG, vol. 199, no. 1, 1994, pages 17-21, XP008071988 Institut für Lebensmittelchemie der Technischen Universität, Braunschweig, Germany
- DATABASE FSTA [Online] INTERNATIONAL FOOD INFORMATION SERVICE (IFIS), FRANkFURT-MAIN, DE; 19 July 1991 (1991-07-19), SCHOLZ-BÖTTCHER B M ET AL: "(In Quatorzieme colloque scientifique international sur le cafe. San Francisco, 14-19 juillet 1991.' Paris, France; Association Scientifique Internationale du Cafe. ISBN 2-900212-13-8 ((see FSTA (1992) 24 6H103)).)" XP002409843 Database accession no. 92-1-06-h0126
- GINZ, M.; ENGELHARDT, U. H.: "Analysis of Bitter Fractions of Roasted Coffee by LC-ESI-MS - New Chlorogenic Acid Derivatives" 19TH ED. COLLOQUE SCIENTIFIQUE INTERNATIONAL SUR LE CAFÉ, 2001, pages 248-252, XP008072068 cited in the application
- DATABASE WPI Derwent Publications Ltd., London, GB; AN 1990-053891 & JP 2 005 825 A (HASEGAWA CO LTD) 10 January 1990
- DATABASE WPI Derwent Publications Ltd., London, GB; AN 1990-366278 & JP 2 265 433 A (HASEGAWA CO LTD) 30 October 1990
- DATABASE WPI Derwent Publications Ltd., London, GB; AN 1999-061080 & CN 1 193 479 A (XU J) 23 September 1998
- NAGEL, C. W. ET AL: "A Research Note: Is Chlorogenic Acid Bitter ?", JOURNAL OF FOOD SCIENCE, vol. 52, no. 1, 1987, pages 213-213,
- Hoffmann, T.: "Battling bitter coffee - chemists vs. main source of coffee bitterness", American Chemical Society , 21 August 2007 (2007-08-21), Retrieved from the Internet: URL:http://www.eurekalert.org/pub_releases /2007-08/acs-bbc080907.php [retrieved on 2010-07-01]

## Description

### FIELD OF THE INVENTION

Embodiments of the present invention generally relate to processes for isolating bitter compounds for use in food and beverage products to enhance the flavors thereof.

### BACKGROUND OF THE INVENTION

Aside from its stimulatory effect, the popularity of freshly brewed coffee beverages is largely due to consumers' enjoyment of the alluring aroma, as well as the attractive and well-balanced taste profile, which is characterized by a unique, coffee-specific bitterness. In general, when present in low levels, the components responsible for bitterness may help reduce the acidity of the coffee while simultaneously providing body and dimension. However, if the concentration of bitter components becomes too low, the fragile balance between aroma, sourness, bitterness and astringency becomes imbalanced, thereby resulting in less desirable flavor attributes. Similarly, if the concentration becomes too high, the bitterness components may overshadow the other taste components present in the coffee beverage, again resulting in an undesirable flavor. Because certain coffee beverages, such as instant and decaf, tend to have much lower concentrations of bitter components, these beverages are often characterized as having an unpleasant, weak flavor by consumers.

Indeed, to date, there is very little information available about the structure of the components that provide this distinctive bitterness. Much of the information that is known tends to focus on methods of removing components, like caffeine, from intensely bitter coffee products to provide more balanced coffee beverages that appeal to a broader base of consumers. GB 2089639 discloses a process for isolating aroma volatiles from an aqueous coffee extract in which said extract is subjected to concentration by evaporation, vapors are then condensed to form an aqueous liquid and said liquid is passed through an adsorbent to adsorb aroma volatiles. JP 02-005825 discloses a manufacturing method for natural bitter substance comprising treating extract of roasted coffee with styrenedivinylbenzene-based or ester methacrylate-based synthetic porous resin absorbent, and collecting the adsorbed component.

If processes were developed to identify and isolate bitter components in a food-grade manner, it is believed that the components could be used to supplement and enhance the flavor of food and beverage products in a variety of ways never before considered. Such processes could simultaneously reduce the wasting of these bitter components while providing a way to enhance the flavor, body and character of other food and beverage products, as will be described herein.

Therefore, there remains a need for processes for isolating bitter compounds, such that the bitter compounds may be added to food and beverage products to enhance the flavors thereof.

### SUMMARY OF THE INVENTION

In one embodiment, the present invention relates to processes for isolating bitter compounds for use in food and beverage products comprising contacting a bitter compound composition with an adsorbent to adsorb the bitter compounds from the bitter compound composition, desorbing the bitter compounds from the adsorbent to obtain a bitter compound isolate and adding the bitter compound isolate to a food or beverage product to enhance the flavor thereof.

In yet another embodiment, the present invention relates to bitter compound isolates for enhancing the flavor of food and beverage products, the bitter compound isolates comprising at least one compound selected from the group consisting of 3-O-caffeoyl-γ-quinide, 4-O-caffeoyl-γ-quinide, 5-O-caffeoyl-epi-δ-quinide, 5-O-caffeoyl-muco-γ-quinide, 3-O-feruloyl-γ-quinide, 4-O-fenrloyl-γ-quinide, 3,4-O-dicaffeoyl-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide, 5-O-feruloyl-epi-δ-quinide, 3,4-O-diferuloyl-γ-quinide, 3,5-O- diferuloyl-epi-δ-quinide, 4,5-O-diferuloyl-muco-γ-quinide; quinide esterified with one or more of caffeic acid, ferulic acid, p-courmaric acid, 3,4-dimethoxycinnamic acid; cis-5,6-dihydroxy-1-methyl-3-(3',4'-dihydroxyphenyl)indan, trans-5,6-dihydroxy-1-methyl-3-(3',4'-dihydroxyphenyl)indan, cis-4,5-dihydroxy-1-methyl-3-(3',4'-dihydroxyphenyl)indan, trans-4,5-dihydroxy-1-methyl-3-(3',4'-dihydroxyphenyl)indan, and mixtures thereof.

### DETAILED DESCRIPTION OF THE INVENTION

### I. DEFINITIONS

As used herein, the term "adsorbent" refers to a food-grade material capable of adsorbing bitter quinides and/or phenylindans from a bitter compound composition, selected from natural or synthetic polymers containing amide groups and combinations thereof. Said absorbent includes, but is not limited to, polyamide, polyvinyl pyrrolidone, polyvinyl polypyrrolidone, casein, zein and combinations thereof.

As used herein, the term "bitter compound(s)" refers to bitter quinides, bitter phenylindans and mixtures thereof, as defined herein below.

As used herein, the term "bitter quinide(s)" or "quinide(s)" is used to generally describe any bitter quinides, including those of the bitter compound isolate, derived from roasting chlorogenic acid.

As used herein, the term "bitter phenylindan(s)" or "phenylindan(s)"is used to generally describe any bitter phenylindan, including those of the bitter compound isolate, derived from roasting chlorogenic acid or caffeic acid.

As used herein, the term "bitter compound isolate" is used to refer to the compounds obtained by the present processes regardless of the method by which they are obtained and which may generally include bitter quinides, bitter phenylindans and mixtures thereof. When used to enhance the flavor of a food or beverage product, the bitter compound isolate does not include any naturally occurring bitter compounds that may be present in the food or beverage product being enhanced.

As used herein, the term "bitter compound composition" means a solid or liquid comprising at least one of bitter quinides, phenylindans and mixtures thereof for use in the processes described herein. The bitter compound composition may comprise at least one roasted chlorogenic acid and/or caffeic acid derived from natural or synthetic acid sources. For illustration purposes, the bitter compound composition may comprise coffee brew or coffee extract.

As used herein, the term "chlorogenic acid(s)" means any free acid derived from natural or synthetic acid sources selected from the group consisting of monocaffeoyl quinic acids, dicaffeoyl quinic acids, tricaffeoyl quinic acids, monoferuloyl quinic acids, diferuloyl quinic acids, triferuloyl quinic acids, quinic acid esterified with one or more of caffeic acid, ferulic acid, p-courmaric acid, 3,4-dimethoxycinnamic acid. Chlorogenic acids, whether derived from natural sources or synthetically, can form bitter quinides when roasted as described herein.

As used herein, the term "comprising" means various components can be cojointly employed in the methods and articles of this invention. Accordingly, the terms "consisting essentially of" and "consisting of" are embodied in the term comprising.

As used herein, the term "food-grade" means that the material may legally be used as part of the unit operations of a food process or, that contact with a food is approved by regulatory authorities. The term "food-grade manner" means using a material such that it satisfies the foregoing regulatory requirements.

As used herein, the term "natural acid source" means a plant material comprising chlorogenic acid and/or caffeic acid. "Natural acid source" includes, but is not limited to, coffee beans, ripe coffee berries, sweet potato leaves, potatoes, apples, pineapples, cherries, peaches and combinations thereof.

As used herein, the term "residual bitter compound composition" means the components of the bitter compound composition that are not adsorbed by the adsorbent or extracted by the solvent.

As used herein, the term "roasting" refers to the process of heating any of the foregoing acids or acid sources, whether natural or synthetic, under the same general conditions as are employed when roasting green coffee beans. The roasting may be performed at ambient or elevated pressure and the roasting temperature may be constant or follow a desired curve (e.g.,. ramping). The acids or acid sources may be roasted independently or they may be mixed with an inert material, such as, for example, cellulose.

As used herein, the term "solvent" means any food-grade solvent including, but not limited to, water, ethanol, acetone, ethyl acetate and mixtures thereof. When used in the desorption step described herein, the solvent may further include any solvent capable of removal of bitter quinides and/or phenylindans from an adsorbent. When used in the extraction step described herein, the solvent may further include any solvent capable of removal of bitter quinides and/or phenylindans from a composition.

### II. BITTER COMPOUNDS

Embodiments of the present invention generally provide methods for isolating bitter compounds, including quinides and phenylindans, for use in food and beverage products. While the following discussion will generally be directed at the identification, isolation and use of such bitter compounds in coffee beverages, it will be understood by those skilled in that art that this use of coffee is done for illustration purposes only and the invention should not be limited to such.

It has been determined that the previously described components may include bitter quinides, and may generally comprise bitter mono- and di-caffeoyl quinides, caffeoyl-feruloyl quinides, and mono- and di-feruloyl quinides. Bitter quinides may be derived from roasted chlorogenic acid, or more specifically, roasted mono-, di-, or tricaffeoyl quinic acids, mono-, di-, or tri-feruloyl quinic acids, or corresponding quinic acids containing caffeoyl and feruloyl residues, that have been roasted under controlled conditions to form quinides upon intramolecular water elimination as well as intermolecular transesterification. The bitter flavor profile of these quinides is unique when compared to other known bitter and sour flavorants found in coffee, such as caffeine, L-phenylalanine and 2,5-diketopiperazines, as well as quinic and phosphoric acids.

In general, the bitter quinides have a distinct, coffee-like "clean" bitterness and astringency while the other flavorants tend to display a sour, acidic flavor. For example, while bitter quinides provide bitterness combined with a slight astringency on the palate, such bitterness can disappear rapidly after swallowing, thus resulting in a clean bitter perception. In contrast, the bitterness of caffeine can be an "alkaloid"-type bitterness that produces an unpleasant lingering bitter aftertaste that can remain in the throat for an extended period of time after swallowing.

Several quinides are known to be present in roasted coffee, including 3-O-caffeoyl-γ-quinide, 4-O-caffeoyl-γ-quinide, 5-O-caffeoyl-epi-δ-quinide and 5-O-caffeoyl-muco-γ-quinide. See, Ginz, M. and Engelhardt, U.H. "Analysis of Fractions of Roasted Coffee by LC-ESI-MS: New Chlorogenic Acid Derivatives," Colloque Scientifique International sur le Café, 19th ed, 248-252, (2001). However, while the existence of these quinides has been discussed, prior to the work of the present inventors, the true bitter character of many of these compounds, as well as their molecular basis, is far less understood. In addition, and as discussed later herein, there is currently no known process for isolating quinides for use in food and beverage products as such use requires the compounds to be prepared in a food-grade manner. See, Food Chemicals Codex, 5th Ed., The National Academies Press, Washington D.C., (2004) pgs. xxix-xxxii. Moreover, the present inventors discovered that the chemical structure of at least two of the aforementioned compounds may not be accurately described in the art, as will be explained below. 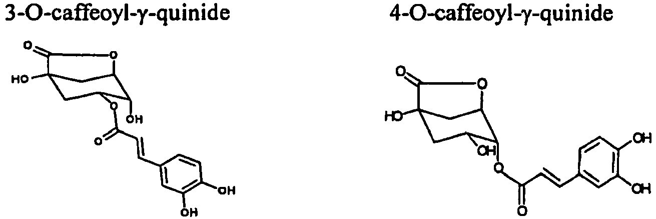 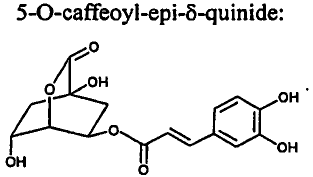 5-O-caffeoyl-epi-δ-quinide is discussed in the Ginz reference, however, the reference identifies the C-3 hydroxyl group as being located in the equatorial position when the present inventors have discovered that that C-3 hydroxyl group is, in fact, located in the axial position (shown above). This is important as stereochemistry is believed to be one of the key factors for determining the flavor activity of a compound. 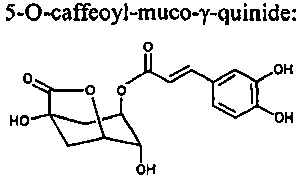 Again, 5-O-caffeoyl-muco-γ-quinide is discussed in the Ginz reference, however, the reference identifies the C-5 caffeic acid group as being located in the equatorial position when the present inventors have discovered that that C-5 caffeic acid group is, in fact, located in the axial position (shown above). Once again, this is an important difference as stereochemistry can help determine the flavor activity of a compound.

In addition to the foregoing quinides, the present inventors have discovered several more varieties. In particular, the present inventors have recently identified 3-O-feruloyl-γ-quinide, 4-O-feruloyl-γ-quinide, 3,4-O-dicaffeoyl-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide and 5-O-feruloyl-epi-δ-quinide, 3,4-O-diferuloyl-γ-quinide, 3,5-O- diferuloyl-epi-δ-quinide, 4,5-O- diferuloyl-muco-γ-quinide as bitter quinides. These newly discovered bitter quinides are distinct from the previously described bitter compounds in that they generally have a more complex substitution pattern and their stereochemistry is different from the known compounds, which, as aforementioned, is believed to be important to the determination of flavor activity.

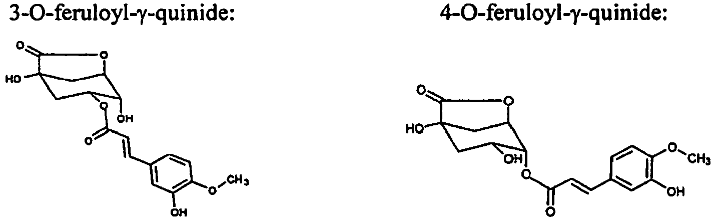

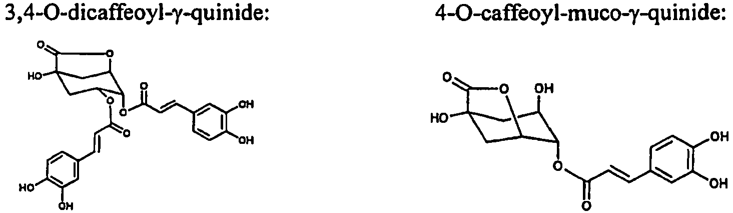

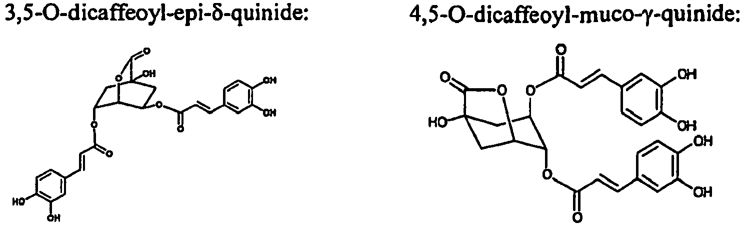

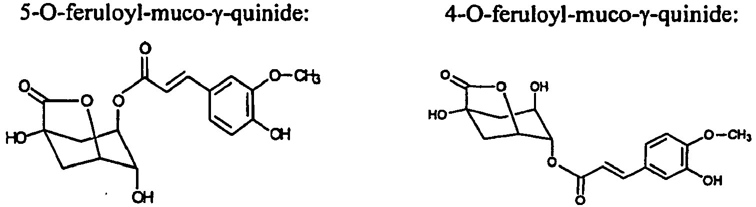

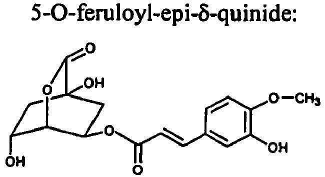

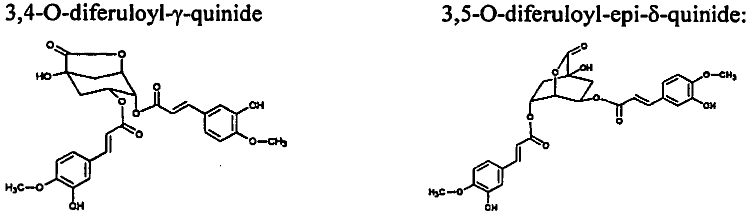

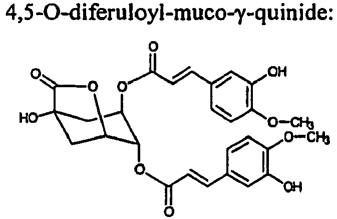

Furthermore, the present inventors have surprisingly discovered a late eluting fraction of even more complex bitter compounds, which have not been previously disclosed. As used herein, "late eluting" means compounds eluting between about 50 and about 56 minutes when using the method for evaluating bitter compounds as described in the Analytical Methods section herein. Without intending to be limited by theory, it is believed that this late eluting bitter fraction comprises numerous quinic acids multiply esterified with one or more of caffeic acid, ferulic acid, p-courmaric acid, 3,4-dimethoxycinnamic acid and combinations thereof. Moreover, taste dilution analysis as described in the literature (for example see: Ottinger, H. et al., "Characterization of natural "cooling" compounds formed from glucose and 1-proline in dark malt by application of taste dilution analysis," Journal of Agricultural and Food Chemistry (2001), 49(3), 1336-44), as well as the calculation of taste activity values, indicates that the compounds comprising this late eluting fraction are the strongest contributors to the unique bitter flavor of coffee.

Also, four strongly bitter tasting compounds have been identified by the present inventors, however, these compounds do not fall into the chemical class of quinides. It has been determined that while these two compounds coelute with the previously mentioned late eluting bitter fraction, they belong to the chemical class of phenylindans. Phenylindans have been previously identified as thermally generated antioxidants, however, the bitter taste of these compounds has not been previously reported in the literature. See, Stadler, R. H., Welti, D. H., Staempfli, A. A. and Fay, L. B. "Thermal Decomposition of Caffeic Acid in Model Systems: Identification of Novel Tetraoxygenated Phenylindan Isomers and Their Stability in Aqueous Solutions", Journal of Agricultural and Food Chemistry, (1996), 44, pgs 898-905; François L. Guillot, Armand Malnoë, and Richard H. Stadler. "Antioxidant Properties of Novel Tetraoxygenated Phenylindan Isomers Formed during Decomposition of Caffeic Acid" Journal of Agricultural and Food Chemistry, (1996), 44, pgs 2503-2510; and EP 687661 A1. In detail, these four compounds can be identified as:
cis-5,6-dihydroxy-1-methyl-3-(3',4'-dihydroxyphenyl)indan 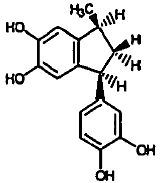
(trans-5,6-dihydroxy-1-methyl-3-(3',4'-dihydroxyphenyl)indan) 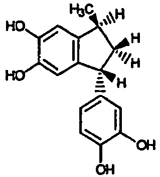
cis-4,5-dihydroxy-1-methyl-3-(3',4'-dihydroxyphenyl)indan 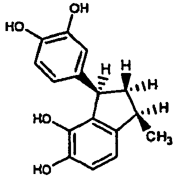
trans-4,5-dihydroxy-1-methyl-3-(3',4'-dihydroxyphenyl)indan

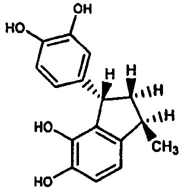

These exciting discoveries, both the determination of the bitter character of several known compounds, as well as the identification of new varieties of bitter compounds, comprise just one aspect of the present invention. In addition, the present inventors have also surprisingly discovered that when properly isolated, bitter compounds (i.e. quinides and/or phenylindans) may be added to food and beverage products to enhance the bitter flavor thereof. Without intending to be limited by theory, it is believed that the flavor enhancement resulting from the addition of these bitter compound isolates to food and beverage products is due to their characteristic roasted coffee-like bitter profile, which cannot be matched by any other known bitter compound (e.g.,. caffeine, quinine, 2,5-diketopiperazines, L-phenylalanine), and which provides a unique, coffee-specific flavor.

### III. PROCESSES FOR ISOLATING BITTER COMPOUNDS FOR USE IN FOOD AND BEVERAGE PRODUCTS

As aforementioned, when isolated properly, the bitter compounds may be used to enhance the flavor or food and beverage products. In one embodiment, the processes herein may relate to isolating bitter compounds selected from mixtures of quinides and phenylindrans for use in food and beverage products generally comprising contacting a bitter compound composition with an adsorbent to adsorb the bitter compounds from the bitter compound composition, said absorbent being selected from the group consisting of natural polymers containing amide groups, synthetic polymers containing amide groups and combinations thereof, desorbing the bitter compounds from the adsorbent to obtain a bitter compound isolate, and adding the bitter compound isolate to a food or beverage product to enhance the flavor thereof.

The first step of the process described herein involves contacting a bitter compound composition with an adsorbent to adsorb the bitter compoundscomprising at least one of bitter quinides, bitter phenylindans and mixtures thereof. More specifically, the bitter compound composition may be either a solid or a liquid and may comprise at least one roasted chlorogenic acid selected from the group consisting of monocaffeoyl quinic acids, di-caffeoyl quinic acids, tricaffeoyl quinic acids, monoferuloyl quinic acids, diferuloyl quinic acids, triferuloyl quinic acids, quinic acid esterified with one or more of caffeic acid, ferulic acid, p-courmaric acid, 3,4-dimethoxycinnamic acid, caffeic acid and mixtures thereof, derived from natural or synthetic acid sources. The bitter compound composition may generally have a pH of less than about 7, and in one embodiment, less than about 6. It has been discovered by the present inventors that at a pH of higher than about 7, the quinide ring of any bitter quinides present may have a tendency to start to open and form corresponding acids, which results in a loss of bitter flavor.

As aforementioned, the roasted acids of the bitter compound composition may be derived from a variety of natural or synthetic acid sources. For example, in one embodiment, the roasted acids can be derived from a natural acid source comprising any plant material comprising chlorogenic acids, such as, for example, green coffee beans, ripe coffee berries, sweet potato leaves, potatoes, and fruits such as apples, pineapples, cherries and peaches. These natural acid sources may first be roasted to convert the chlorogenic acid and/or caffeic acid to bitter quinides and/or phenylindans, which may then be extracted using the processes described herein. Alternately, the chlorogenic acids and/or caffeic acid may be extracted from the natural acid source and then roasted to convert the acids to bitter quinides and/or phenylindans. Examples of bitter compound compositions derived from natural acid sources include, but are not limited to, coffee brew or coffee extract.

Coffee brew may comprise a medium strength brewed roast and ground coffee made from about 20g to about 60g of roast and ground coffee and about 1000mL to about 1500mL of water. Such coffee brew may be produced in a conventional brewer, as well as any other brewing device or appliance known in the art. Coffee extract may be obtained from coffee through a variety of extraction methods from, including, but not limited to, direct extraction via the use of solvents, such as mixtures of ethanol and water, or by batch extraction, column extraction or continuous extraction using, for example, a Soxhlet-type extraction unit. Those skilled in the art will understand how to carry out the foregoing extraction procedures. Once the coffee extract is obtained, it may be purified and/or concentrated prior to use as a bitter compound composition.

The coffee used to make the coffee brew or coffee extract may be derived from any of a number of countries of origin, including, but not limited to, Columbia, Mexico, Guatemala, Brazil or combinations thereof, and it may be caffeinated or decaffeinated. Additionally, the coffee brew or coffee extract may comprise a single variety of coffee, such as Arabica or Robusta, or it may comprise a blend thereof. Moreover, while the coffee used to make the coffee brew or coffee extract may be roasted to any degree using common practices, in one embodiment, the coffee may comprise light to medium roasts, since it has been found by the present inventors that bitter quinides can have a tendency to degrade during prolonged roasting.

In another embodiment, the roasted acids of the bitter compound composition may be derived from a synthetic acid source, such as, for example, synthetic chlorogenic acid or caffeic acid.

Roasting any of the foregoing acids or acid sources, whether natural or synthetic, may comprise roasting under the same general conditions as are employed when roasting green coffee beans. The roasting may be performed at ambient or elevated pressure and the roasting temperature may be constant or follow a desired curve (e.g.,. ramping). However, when roasting the acids directly, rather than roasting the acid source and extracting the roasted acids, it should be noted that the acids may be roasted independently or they may be mixed with an inert material, such as, for example, cellulose, to drive the roasting products in a certain direction. Without intending to be limited by theory, it is believed that if the acids are roasted on their own, the formation of the more complex late eluting fraction may be favored while if the acids are mixed with an inert material, the formation of mono-quinides may be favoured. In any case, once the roasting is complete, the resulting bitter compound may be put into solution with solvent to prepare for the next step, which may comprise either adsorption or extraction.

### i. Adsorption

While any adsorbent capable of adsorbing the bitter compounds may be used, because embodiments of the present invention seek to produce a bitter compound isolate acceptable for use in food and beverage products, in one embodiment, the adsorbent may comprise a food-grade adsorbent. As used herein, "food-grade" means that the material may legally be used as part of the unit operations of a food process or, that contact with a food is approved by regulatory authorities. Some examples of adsorbents acceptable for use herein include, but are not limited to, polyamide, polyvinyl pyrrolidone, polyvinyl polypyrrolidone, casein, zein and combinations thereof.

Having selected the adsorbent, the bitter compound composition may be contacted with the adsorbent in a variety of ways, including, but not limited to, batch extraction or column isolation. Each method is described in more detail below.

When using batch extraction, the adsorbent may be added directly into the bitter compound composition. Batch extraction may be carried out at any temperature, though in one embodiment, the bitter compound composition can be cooled to about room temperature prior to adding the adsorbent because it is believed that higher temperatures may decrease the overall bitter compound yield. Also, the amount of time the adsorbent is held in contact with the bitter compound composition will vary, but generally, from about 5 minutes to about 15 minutes is sufficient time to achieve about 95% adsorption of bitter compounds. Similarly, the amount of adsorbent needed for optimum bitter compound adsorption will vary according to the adsorbent used. While those skilled in the art will understand how to select the proper condition for carrying out batch extraction, the following is provided for illustration purposes.

As an example, when using polyvinyl pyrrolidone (PVP), the ratio of adsorbent to bitter compound composition may be about 15g PVP to about 200mL bitter compound composition. This ratio generally results in at least about 95% adsorption of bitter compounds within about 10 minutes. Compare that to using casein as the adsorbent, wherein having a ratio of about 15g casein to about 200mL bitter compound composition may typically result in an adsorption of bitter compounds of only about 50%-60%. Thus, in this latter case, it may be preferred to use a ratio of casein to bitter compound composition of about 30g casein to about 200mL of bitter compound composition. Using this latter ratio of casein to bitter compound composition can generally provide adsorption of at least about 80% of the bitter compound present in the bitter compound source.

Alternately, when using column isolation to adsorb the bitter compounds from the bitter compound composition, a slurry of adsorbent and water can be used to fill a column. The column may be any standard isolation column of any size. The adsorbent may then be washed, first by pumping a solvent through the column, then by pumping water through the column. In one embodiment, the solvent used herein can be food-grade such that the fractions acquired by the present process are acceptable for use in food and beverage products. Solvents acceptable for use may comprise any food-grade solvent including, but not limited to, ethanol, acetone, ethyl acetate and mixtures thereof.

After washing the column with water, a bitter compound composition may be applied via the top of the column and the bitter compounds, along with any free caffeoyl quinic and free feruloyl quinic acids, can be adsorbed by the adsorbent while the residual bitter compound composition can pass through the column, thus effectively separating the bitter compounds and free acids from the residual bitter compound composition. As used herein, the term "residual bitter compound composition" means the components of the bitter compound composition that are not adsorbed by the adsorbent, which generally includes any non-phenolic organic or inorganic material, (e.g.,. citric acid, quinic acid, malic acid, phosphoric acid), minerals (e.g.,. sodium, potassium), caffeine, and coffee odorants. One skilled in the art will understand that the amount of bitter compound composition that can be applied to the column may be dependent on the nature and amount of adsorbent present within the column, which in turn, is dependent upon the size of the column. For example, when using polyamide as the adsorbent and coffee brew as the bitter compound composition, typically about 12-15 mL of coffee brew can effectively be applied to about 1 gram polyamide. Those skilled in the art will understand how to select a column size and adsorbent in view of the foregoing ratio of adsorbent to bitter compound composition.

Once the bitter compound composition has been in sufficient contact with the adsorbent to adsorb the bitter compounds and free caffeoyl and feruloyl quinic acids, the adsorbent may be removed from the residual bitter compound composition if necessary, and washed. If column isolation is used, the adsorbent comprising the bitter compounds will be automatically separated from the residual bitter compound during the isolation process and thus, no further removal is needed. However, the adsorbent may be washed by flushing the column with several column volumes of water. If, on the other hand, batch extraction is used, the adsorbent may be filtered off from the residual bitter compound composition and again, optionally washed with water. Washing with water can aid in the removal of any residual bitter compound composition that may be present on the adsorbent. In both instances, the amount of water used, as well as the number of washing cycles, is not critical as there is generally very little loss of the desired bitter compounds during this washing process. However, alkaline condition should be avoided due to the instability of the bitter compounds under alkaline conditions.

At this point, the residual bitter compound composition may have a tea-like flavor consisting of sour and astringent flavor attributes with no perceivable bitterness. If so desired, this residual bitter compound composition may be added to coffee beverages having substantial bitterness, such as, for example, fast roasted Robusta coffees, or lightly roasted coffees, in order to reduce the bitterness thereof. Without intending to be limited by theory, it is believed that when combined with a highly bitter coffee beverage, the residual bitter compound composition can reduce intense bitterness while maintaining other coffee attributes like sourness, caffeine levels and mineral content, thereby resulting in a more balanced blend. While this use of the residual bitter compound composition is certainly acceptable, the bitter compounds that remain adsorbed by the adsorbent can be processed further before they may be used to enhance the flavor of food and beverage products.

### ii. Desorbing the Bitter Compounds from the Adsorbent

Having completed the foregoing steps, the bitter compounds may now be desorbed from the adsorbent to obtain a bitter compound isolate. Unlike the art, which typically considers any bitter components removed from a coffee brew to be waste material, the present inventors surprisingly discovered that the present bitter isolates may be added to food and beverage products to actually enhance the flavor thereof.

Similar to adsorption, the desorption step may also be carried out via batch extraction or column extraction. For batch extraction, the adsorbent comprising the bitter compounds can be re-suspended in a solvent. Solvents acceptable for use herein may comprise any of the aforementioned food-grade solvents capable of removing the bitter compounds from the adsorbent, including, but not limited to, ethanol, acetone and mixtures thereof. Depending on the adsorbent and solvent used, desorption may be performed at various temperature conditions. For example, when using ethanol as the solvent, the solvent may be hot (about 60°C to about 80°C) when using PVP as the adsorbent, or room temperature (about 21°C) when using polyamide and/or casein as the adsorbent. Those skilled in the art will understand how to select the proper temperature according to the adsorbent and solvent used. The adsorbent/solvent mixture is stirred for about 15 minutes to support desorption, after which, the adsorbent can be filtered off and a bitter compound isolate collected. This process may be repeated several times and the bitter compound isolates combined.

If using column extraction, the column can be flushed with several column volumes of solvent. In this instance, the present inventors surprisingly discovered that the bitter compound isolate is quantitatively eluted from the adsorbent while other phenolic materials, such as free caffeoyl quinic or feruloyl quinic acids, tend to remain adsorbed on the resin.

Regardless of which method is used, the resulting bitter compound isolate may optionally be further treated. For instance, the bitter compound isolate may be concentrated under vacuum, such as by rotary evaporation, to a desired strength, or completely dried. Also, the bitter compound isolate may be further purified by, for example, membrane filtration or solvent extraction, to remove any residual odorants, such as 4-vinylguaiacol, which provide smoky notes.

Once the bitter compound isolate is collected, and optionally further concentrated or purified, it may be used in food and beverage products.

### II. USE OF THE BITTER COMPOUND ISOLATE

At this point, the bitter compound isolate may be used in food and beverage products to enhance the flavors thereof. In one embodiment, the bitter compound isolate may comprise at least one compound selected from the group consisting of 3-O-caffeoyl-γ-quinide, 4-O-caffeoyl-γ-quinide, 5-O-caffeoyl-epi-δ-quinide, 5-O-caffeoyl-muco-γ-quinide, 3-O-feruloyl-γ-quinide, 4-O-feruloyl-γ-quinide, 3,4-O-dicaffeoyl-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide, 5-O-feruloyl-epi-δ-quinide, 3,4-O-diferuloyl-γ-quinide, 3,5-O- diferuloyl-epi-δ-quinide, 4,5-O- diferuloyl-muco-γ-quinide, or quinide esterified with one or more of caffeic acid, ferulic acid, p-courmaric acid, 3,4-dimethoxycinnamic acid, or cis-5,6-dihydroxy-1-methyl-3-(3',4'-dihydroxyphenyl)indan, trans-5,6-dihydroxy-1-methyl-3-(3',4'-dihydroxyphenyl)indan, cis-4,5-dihydroxy-1-methyl-3-(3',4'-dihydroxyphenyl)indan, trans-4,5-dihydroxy-1-methyl-3-(3',4'-dihydroxyphenyl)indan, and mixtures thereof. Such compounds may be derived from roasted natural or synthetic acid sources as described above, or they may be synthesized directly.

As aforementioned, the present bitter compound isolates may be added to any food or beverage product to provide a unique, coffee-like bitterness. Some of the more common products benefiting from the addition of bitter compounds may include, but are not limited to, instant coffee, decaffeinated coffee, roast and ground coffee, ready-to-drink coffee, coffee concentrates, creamy coffees with or without additional flavorants, chocolate milk, chocolate, ice cream and candy. Due to the different ingredients that make up the foregoing products, the bitter compound isolate may have a different effect on the different food and beverage products to which they are added.

Focusing on the coffee beverage products for a moment, the present inventors have discovered that instant, decaffeinated and dark-roasted roast and ground coffees and coffee beverages, in particular, can benefit from the addition of bitter compound isolates because these products are naturally lower in such bitter-tasting compounds. During instant processing, the bitter compounds may be destroyed by the harsh extraction conditions used, while during decaffeination, the acid precursors may be partially extracted resulting in lower bitter compound levels after roasting. Dark roasts can contain lesser amounts of bitter compounds compared to light roast because these bitter compounds are formed early in the roasting process and may be destroyed under prolonged roasting conditions. Thus, by adding the bitter compound isolate to such products, the overall flavor of the product may be enhanced to provide a more balanced product. Additionally, the present inventors have found that along with the enhancement in flavor, the general body, strength and mouthfeel of these coffee products can be enhanced. The foregoing coffee products may comprise any form, including, but not limited to ready-to-make coffees, ready-to-drink-coffees or concentrated coffees.

Turning to the non-coffee based foods and beverages, such as chocolate, candy and milk, the present inventors have surprisingly found that adding bitter compound isolates to such products can complement the flavors thereof by providing a flavor typical of freshly brewed coffee. Obtaining a good coffee flavor in non-coffee based foods and beverages can be quite difficult as it often involves using a variety of expensive and unstable odorants. In contrast, as the bitter compound sources described herein are generally readily available, using the bitter compound isolates can provide a less expensive, convenient and natural way to flavor a product. In addition, the bitter compound isolates can provide the unique and characteristic flavor typical of freshly brewed coffee where it may often be difficult to achieve a similar result with currently available flavorants. Moreover, this freshly brewed coffee taste can be provided via the bitter compound isolates without adding any caffeine to the product. However, it should be noted that the present bitter compound isolates may be used in conjunction with currently available flavorings to provide a more natural, complex and realistic overall coffee flavor perception.

It will be understood by those skilled in the art that the amount of bitter compound isolate added to each of the foregoing food and beverage products will differ according to flavor preferences and desired flavor. Representative illustrations of the use of bitter compound isolates to enhance the flavor of food and beverage products are found herein in the Examples.

### ANALYTICAL METHODS

Parameters used to characterize elements of the present invention are quantified by particular analytical methods. Those methods are described in detail as follows.

### Method for Evaluating Bitter Compounds present in a Bitter Compound Composition

Bitter compounds, like bitter quinides and/or phenylindans, present in a bitter compound composition are analyzed by HPLC-DAD and HPLC-MS, respectively.

For analysis of the caffeoyl quinic acids, caffeoyl quinides and feruloyl quinic acids, the system consists of a 2695 separation module (Waters, Milford, MA, USA), a 2996 photometric array detector (Waters, Milford, MA, USA) and a Micromass ZMD mass spectrometer (provided by Waters, Milford, MA, USA). Operating in positive electrospray mode, MS-analysis is performed in scan and single-ion-monitoring mode using m/z=355 for the caffeoylquinic acids, m/z=337 for the caffeoyl quinides, and m/z=369 for feruloylquinic acids. For illustration purposes only, coffee brew is used though it will be understood that any bitter compound composition may be employed. Inject 10ul of coffee brew directly onto an analytical Phenyl-Hexyl column (250 x 4.6 mm, Luna, Phenomenex, Torrance, CA, USA) kept at 40°C. Maintaining a flow rate of 0.8mL/min and monitoring the effluent at 326 nm, perform chromatography starting with a mixture (75/25, v/v) of aqueous ammonium formate buffer (250 mmol, pH 3.5) and methanol, thereafter increasing the methanol content to 30 % within 30 minutes, then to 50 % within 15 minutes, and finally to 100% within 10 minutes. This methanol content is maintained for additional 10 minutes. Under these conditions, the free caffeoylquinic acids typically elute after 6.07 minutes, 8.53 minutes and 8.71 minutes, the feruloylquinic acids elute after 16.30 minutes and 16.78 minutes, the five caffeoylquinides elute after 17.4 minutes, 18.1 minutes, 19.1 minutes, 20.2 minutes and 22.3 minutes, as discrete peaks. In addition, a highly complex and intensely bitter tasting late eluting fraction comprising numerous multiply esterified quinic acid isomers and phenylindans elutes as one complex peak between 50 minutes and 56 minutes.

For analysis of the di-caffeoyl quinides, the feruloyl quinides, the di-feruloyl quinides, as well as the phenylindans, an Agilent 1100 series HPLC (Agilent, Palo Alto, CA, USA) is coupled to a API 4000 Q-Trap mass spectrometer (Applied Biosystems, Darmstadt, Germany) operating in the multiple reaction monitoring mode (MRM) for detecting negative ions. For a duration of 150 ms, the mass transition reactions *m*/*z* 497→335 and 497→161 are used for the detection of di-caffeoyl quinides, *m*/*z* 349→193 and 349→175 for the feruloyl quinides, 525→193 and 525→175 for the di-feruloyl quinides and 271→146 and 271→109 for the cis-/ trans-5,6-dihydroxy-1-methyl-3-(3',4'-dihydroxyphenyl)indan) and 271→161 and 271→109 for the cis-/ trans-4,5-dihydroxy-1-methyl-3-(3',4'-dihydroxyphenyl)indan. Zero grade air serves as nebulizer gas (35 psi) and as turbo gas (400°C) for solvent drying (45 psi).

For monitoring the individual di-caffeoyl and di-feruloyl quinides, chromatography is performed on an analytical column (Synergi Fusion-RP, 150 x 2 mm i.d., 4 µm, Phenomenex, Aschaffenburg, Germany). After injection of the sample (10 µL), analysis is performed using a gradient, starting with a mixture (60/40, v/v) of aqueous formic acid (1%) and methanol, and increasing the methanol content to 60% within 15 minutes, and then to 100 % within 25 minutes while maintaining a flow rate of 250µL/min.

For monitoring individual feruloyl quinides, chromatography is performed on an analytical Phenyl-Hexyl column (250 x 4.6 mm, Luna, Phenomenex, Torrance, CA, USA). After injection of the sample (10µL), chromatography is performed starting with a mixture (75/25, v/v) of aqueous ammonium formate buffer (500 mmol, pH 3.5) and methanol, thereafter increasing the methanol content to 28 % within 34.5 minutes, then to 50 % within 10 minutes, and finally to 100% within 5 minutes while maintaining a flow rate of 1.0mL/min.

For monitoring the individual phenylindans, chromatography is performed on an analytical column (Synergi Fusion-RP, 150 x 2 mm i.d., 4 µm, Phenomenex, Aschaffenburg, Germany or Zorbax Eclipse XDB-C18, 150 x 2.1 mm i.d., 4 µm, Agilent, Waldbronn, Germany). After injection of the sample (5 - 20 µL), analysis is performed using a gradient, starting with a mixture (75/25, v/v) of aqueous formic acid (0.1%) and acetonitrile, and increasing the acetonitril content to 28% within 5 minutes, then to 30% within 20 minutes and then to 100 % within 5 minutes while maintaining a flow rate of 250µL/min.

### EXAMPLES

### Example 1

About 500 grams of polyamide (SC-6, Machery & Nagel, Easton, PA) is suspended in about 1500 mL of water and allowed to swell for about 2 hours at about room temperature. Fines floating on the surface are removed and the slurry is filled into a XK 50/100 column (100cm x 5.0cm; Amersham Pharmacia, Piscataway, NJ) until a column bed height of about 90cm is obtained. Using Tefzel® tubing (Amersham Pharmacia, Piscataway, NJ) and Masterflex® silicone tubing (size 16; Cole Palmer, Chicago, IL) the column is connected to a peristaltic pump (Baker Technical Industries.) To remove any impurities, the column is flushed with 200 proof ethanol (Aaper, Shelbyville, KY) for 8 hours at a flow rate of about 14.7mL/min. Subsequently, the mobile phase is switched to water and the column continues to be flushed for approximately 12 additional hours.

About six liters of coffee brew is prepared in batches containing about 50g roast and ground coffee (Folgers® Gourmet Supreme decaf) and 1100mL of water using a coffee maker. The coffee brew is then cooled to about room temperature in an ice bath. About 5 liters of the coffee brew is applied to the column at a flow rate of about 14.5mL/min, and then the column is washed with water (Milli-Q®) for about 12 hours. Finally, the mobile phase is switched to 200 proof ethanol (Aaper, Shelbyville, KY) and after the aqueous dead volume of the column (about 1.4liters) is pumped from the column, the ethanolic effluent containing the bitter compound isolate is collected. After collecting about 5.61 liters of the isolate, which is the equivalent of about four column volumes, isolation is stopped. The ethanol is removed from the isolate by rotary evaporation (Buechi, New Castle, DE) conducted at about 40°C and about 70mbar and the remaining dry residue of the bitter compound isolate is dissolved in about 50mL of 200 proof ethanol (Aaper, Shelbyville, KY). Any insoluble material is removed by centrifugation. The bitter compound isolate is analyzed using the Analytical Methods described herein and is found to comprise bitter quinides and phenylindans acceptable for use in food and beverage products.

### Example 2

About 1 gram of chlorogenic acid (Aldrich, Milwaukee, WI) and about 2mL of water (Milli-Q®) are mixed and subsequently dried at about 70°C. The residues are then dry-heated for about 18 minutes at from about 220-230°C. The resulting reaction products are dissolved in hot water (Milli-Q®, 100 mL) and after cooling to about room temperature, are extracted with ethyl acetate (5 x 25 mL, Aldrich, Milwaukee, WI). The combined organic layers are freed from solvent and the residues are taken up in ethanol/water (30/70, v/v ; 10 mL) for further processing.

In case residual chlorogenic acid needs to be removed, polyamide (MN-SC-6, Machery & Nagel, Easton, PA) is suspended in water and filled in a glass column (300 x 30 mm) up to about 160 mm. The polyamide is conditioned with a mixture of about 250mL of ethanol and about 250mL of water and the residues dissolved in water (Milli-Q) are applied to the column. The column is washed with about 750mL of water and the bitter compounds are eluted using about 500mL of ethanol. Finally, the ethanolic bitter compound isolate is concentrated by rotary evaporation in vacuum (45°C, 70mbar) to a desired strength. The bitter compound isolate is analyzed using the Analytical Methods described herein and is found to comprise bitter quinides and phenylindans acceptable for use in food and beverage products.

### Example 3

About 0.250 - 0.500mL of the ethanolic bitter compound isolate of Example 1 (the equivalent to about 25-50mg dry weight) is dried under a stream of nitrogen and subsequently, is dissolved in about 100mL instant coffee beverage prepared from about 1.5g of Folgers® instant coffee and about 100mL water. When compared to an instant coffee beverage without the added bitter compound isolate, the instant coffee beverage having the added bitter compound isolate has an enhanced, freshly brewed coffee flavor combined with increased body and strength while the hydrolyzed off-note, which is typical for instant coffee, is decreased. Overall, the instant coffee beverage supplemented with the bitter compound isolate is perceived to be much closer in taste to a freshly brewed coffee.

### Example 4

About 0.1 - 0.25mL of the ethanolic bitter compound isolate from Example 1 (the equivalent to about 10-25mg dry weight) is dried under a stream of nitrogen and subsequently, is dissolved in about 100mL of freshly brewed roast and ground decaffeinated coffee prepared using about 33.3g of Folgers Gourmet Supreme® decaf coffee and about 1420mL of water. A comparison to decaffeinated coffee not supplemented with the bitter compound isolate shows that the coffee having the added bitter isolate has increased strength and body and an improved mouthfeel.

### Example 5

About 50g of milk chocolate (Milka®) is melted over a hot water bath and about 0.6mL (about 60mg dry weight) of the ethanolic bitter compound isolate from Example 1 is added and distributed evenly by stirring. The chocolate/bitter compound isolate combination is then transferred into a crystallization bowl and is placed into a refrigerator to harden for about 30 minutes. The chocolate, now having the added bitter compound isolate, displays a character similar to dark chocolate, good coffee flavor and good coffee-like mouthfeel.

### Example 6

About 15g of Nesquick® double chocolate cocoa powder (Nestle) is dissolved in about 235mL milk and is heated in a microwave. Then about 0.3mL of the ethanolic bitter compound isolate from Example 1 (the equivalent to about 30mg dry weight) is added to the hot beverage with stirring to enhance the flavor thereof. The enhanced chocolate milk displays good coffee flavor and good coffee like mouthfeel.

## Claims

1. A process for enhancing the flavor of a food or a beverage product **characterized in that** the process has the steps of:
a. contacting a bitter compound composition, said bitter compound composition comprising at least one bitter compound selected from the group consisting of quinides, penylindans and mixtures thereof, with an adsorbent to adsorb said at least one bitter compound from the bitter compound composition, said adsorbent being selected from the group consisting of natural polymers containing amide groups, synthetic polymers containing amide groups and combinations thereof;
b. desorbing said at least one bitter compound from the adsorbent with a solvent to obtain a bitter compound isolate; and
c. adding the bitter compound isolate to a food or beverage product to enhance the flavor thereof.

2. The process of Claim 1 wherein the bitter compound composition is derived from at least one acid selected from the group consisting of roasted chlorogenic acid, roasted caffeic acid and mixtures thereof, derived from a natural or synthetic acid source.

3. The process of Claim 1 wherein the bitter compound composition contains coffee brew, coffee extract, or mixtures thereof.

4. The process of Claim 2 wherein the natural acid source is a plant material containing an acid selected from the group consisting of chlorogenic acid, caffeic acid and mixtures thereof.

5. The process of Claim 2 wherein the natural acid source is selected from the group comprising coffee beans, ripe coffee berries, sweet potato leaves, potatoes, apples pineapples, cherries, peaches and combination thereof.

6. The process of Claim 1 wherein the adsorbent is selected from the group consisting of polyamide, polyvinyl pyrrolidone, polyvinyl polypyrrolidone, casein, zein and combinations thereof.

7. The process of claim 1, wherein the solvent is a food-grade solvent.

8. The process of claim 1, wherein the solvent is selected from the group consisting of ethanol, acetone, ethyl acetate and mixtures thereof.

9. The process of Claim 1 wherein the bitter compound isolate contains at least one compound selected from the group consisting of 3-O-caffeoyl-γ-quinide, 4-O-caffeoyl-γ-quinide, 5-O-caffeoyl-epi-δ-quinide, 5-O-caffeoyl-muco-γ-quinide, 3-O-feruloyl-γ-quinide, 4-O-feruloyl-γ-quinide, 3,4-O-dicaffeoyl-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide, 5-O-feruloyl-epi-δ-quinide, 3,4-O-diferuloyl-γ-quinide, 3,5-O-diferuloyl-epi-δ-quinide, 4,5-O-diferuloyl-muco-γ-quinide; quinide esterified with one or more of caffeic acid, ferulic acid, p-coumaric acid, 3,4-dimethoxycinnamic acid; cis-5,6-dihydroxy-1-methyl-3-(3',4'-dihydroxyphenyl)indan, trans-5,6-dihydroxy-1-methyl-3-(3',4'-dihydroxyphenyl)indan, cis-4,5-dihydroxy-1-methyl-3-(3',4'-dihydroxyphenyl)indan, trans-4,5-dihydroxy-1-methyl-3-(3',4'-dihydroxyphenyl)indan, and mixtures thereof.

10. A bitter compound isolate for enhancing the flavor of a food or a beverage product **characterized in that** it contains at least one compound selected from the group consisting of 5-O-caffeoyl-epi-δ-quinide, 5-O-caffeoyl-muco-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide, 5-O-feruloyl-epi-δ-quinide, 3,5-O-diferuloyl-epi-δ-quinide, 4,5-O-diferuloyl-muco-γ-quinide; quinide esterified with one or more acids selected from the group consisting of p-coumaric acid and 3,4-dimethoxycinnamic acid; cis-4,5-dihydroxy-1-methyl-3-(3',4'-dihydroxyphenyl)indan, trans-4,5-dihydroxy-1-methyl-3-(3',4'-dihydroxyphenyl)indan, and mixtures thereof.

11. A bitter compound isolate according to claim 10, wherein said at least one quinide esterified with one acid selected from the group consisting of p-coumaric acid and 3,4-dimethoxycinnamic acid is further esterified with one acid selected from the group consisting of caffeic acid and ferulic acid.

12. Use of a bitter compound isolate for enhancing the flavor of a food or a beverage product, wherein said bitter compound isolate contains at least one compound selected from the group consisting of 3-O-caffeoyl-γ-quinide, 4-O-caffeoyl-γ-quinide, 5-O-caffeoyl-epi-δ- quinide, 5-O-caffeoyl-muco-γ-quinide, 3-O-feruloyl-γ-quinide, 4-O-feruloyl-γ-quinide, 3,4-O-dicaffeoyl-γ-quinide, 4-O-caffeoyl-muco-γ-quinide, 3,5-O-dicaffeoyl-epi-δ-quinide, 4,5-O-dicaffeoyl-muco-γ-quinide, 5-O-feruloyl-muco-γ-quinide, 4-O-feruloyl-muco-γ-quinide, 5-O-feruloyl-epi-δ-quinide, 3,4-O-diferuloyl-γ-quinide, 3,5-O-diferuloyl-epi-δ-quinide, 4,5-O-diferuloyl-muco-γ-quinide; quinide esterified with at least one acid selected from the group consisting of caffeic acid, ferulic acid, p-coumaric acid and 3,4-dimethoxycinnamic acid; cis-5,6-dihydroxy-1-methyl-3-(3',4'-dihydroxyphenyl)indan, trans-5,6-dihydroxy-1-methyl-3-(3',4'-dihydroxyphenyl)indan, cis-4,5-dihydroxy-1-methyl-3-(3',4'-dihydroxyphenyl)indan, trans-4,5-dihydroxy-1-methyl-3-(3',4'-dihydroxyphenyl)indan, and mixtures thereof.

13. The use according to claim 12, wherein said food or beverage product is selected from the group consisting of instant coffee, decaffeinated coffee, roast and ground coffee, ready-to-drink coffee, coffee concentrates, creamy coffee with or without additional flavors, chocolate milk, chocolate, ice cream and candy.

## Patentansprüche

1. Verfahren zum Verbessern des Geschmacks eines Nahrungsmittels oder eines Getränkeprodukts, **dadurch gekennzeichnet, dass** das Verfahren die folgenden Schritte aufweist:
a. das Inkontaktbringen einer Bitter-Verbindungs-Zusammensetzung, wobei die Bitter-Verbindungs-Zusammensetzung mindestens eine bittere Verbindung umfasst, welche aus der Gruppe ausgewählt ist, die aus Chiniden, Phenylindanen und Gemischen davon besteht, mit einem Adsorptionsmittel, wobei die mindestens eine bittere Verbindung von der Bitter-Verbindungs-Zusammensetzung adsorbiert wird, wobei das Adsorptionsmittel aus der Gruppe ausgewählt ist, welche aus natürlichen Polymeren, enthaltend Amidreste, synthetischen Polymeren, enthaltend Amidreste, und Kombinationen davon besteht;
b. das Desorbieren der mindestens einer bitteren Verbindung von dem Adsorptionsmittel mit einem Lösungsmittel, wobei ein Bitter-Verbindungs-Isolat erhalten wird; und
c. das Geben des Bitter-Verbindungs-Isolats zu einem Nahrungsmittel oder Getränkeprodukt, um den Geschmack davon zu verbessern.

2. Verfahren nach Anspruch 1, wobei sich die Bitter-Verbindungs-Zusammensetzung von mindestens einer Säure ableitet, welche aus der Gruppe ausgewählt ist, die aus Röst-Chlorogensäure, Röst-Kaffeesäure und Gemischen davon besteht, abgeleitet von einer natürlichen oder synthetischen Säurequelle.

3. Verfahren nach Anspruch 1, wobei die Bitter-Verbindungs-Zusammensetzung Kaffeesud, Kaffeeextrakt oder Gemische davon enthält.

4. Verfahren nach Anspruch 2, wobei die natürliche Säurequelle ein Pflanzenmaterial ist, welches eine Säure enthält, die aus der Gruppe ausgewählt ist, welche aus Chlorogensäure, Kaffeesäure und Gemischen davon besteht.

5. Verfahren nach Anspruch 2, wobei die natürliche Säurequelle aus der Gruppe ausgewählt ist, welche Kaffeebohnen, reife Kaffeebeeren, Süßkartoffelblätter, Kartoffeln, Äpfel, Ananas, Kirschen, Birnen und eine Kombination davon umfasst.

6. Verfahren nach Anspruch 1, wobei das Adsorptionsmittel aus der Gruppe ausgewählt ist, welche aus Polyamid, Polyvinylpyrrolidon, Polyvinylpolypyrrolidon, Casein, Zein und Kombinationen davon besteht.

7. Verfahren nach Anspruch 1, wobei das Lösungsmittel ein Lösungsmittel mit Lebensmittelqualität ist.

8. Verfahren nach Anspruch 1, wobei das Lösungsmittel aus der Gruppe ausgewählt ist, welche aus Ethanol, Aceton, Ethylacetat und Gemischen davon besteht.

9. Verfahren nach Anspruch 1, wobei das Bitter-Verbindungs-Isolat mindestens eine Verbindung enthält, welche aus der Gruppe ausgewählt ist, die aus 3-O-Caffeoyl-γ-chinid, 4-O-Caffeoyl-γ-chinid, 5-O-Caffeoyl-epi-δ-chinid, 5-O-Caffeoyl-muco-γ-chinid, 3-O-Feruloyl-γ-chinid, 4-O-Feruloyl-γ-chinid, 3,4-O-Dicaffeoyl-γ-chinid, 4-O-Caffeoyl-muco-γ-chinid, 3,5-O-Dicaffeoyl-epi-δ-chinid, 4,5-O-Dicaffeoyl-muco-γ-chinid, 5-O-Feruloyl-muco-γ-chinid, 4-O-Feruloyl-muco-γ-chinid, 5-O-Feruloyl-epi-5-chinid, 3,4-O-Diferuloyl-γ-chinid, 3,5-O-Diferuloyl-epi-δ-chinid, 4,5-O-Diferuloylmuco-γ-chinid; Chinid, verestert mit einer oder mehreren von Kaffeesäure, Ferulasäure, p-Cumarsäure, 3,4-Dimethoxyzimtsäure; cis-5,6-Dihydroxy-1-methyl-3-(3',4'-dihydroxyphenyl)indan, trans-5,6-Dihydroxy-1-methyl-3-(3',4'-dihydroxyphenyl)-indan, cis-4,5-Dihydroxy-1-methyl-3-(3',4'-dihydroxyphenyl)indan, trans-4,5-Di-hydroxy-1-methyl-3-(3',4'-dihydroxyphenyl)indan und Gemischen davon besteht.

10. Bitter-Verbindungs-Isolat zum Verbessern des Geschmacks eines Nahrungsmittels oder eines Getränkeprodukts, **dadurch gekennzeichnet, dass** es mindestens eine Verbindung enthält, welche aus der Gruppe ausgewählt ist, die aus 5-O-Caffeoyl-epi-δ-chinid, 5-O-Caffeoyl-muco-γ-chinid, 4-O-Caffeoyl-muco-γ-chinid, 3,5-O-Dicaffeoylepi-δ-chinid, 4,5-O-Dicaffeoyl-muco-γ-chinid, 5-O-Feruloyl-muco-γ-chinid, 4-O-Feruloyl-muco-γ-chinid, 5-O-Feruloyl-epi-δ-chinid, 3,5-O-Diferuloyl-epi-δ-chinid, 4,5-O-Diferuloyl-muco-γ-chinid; Chinid, verestert mit einer oder mehreren Säuren, welche aus der Gruppe ausgewählt sind, die aus p-Cumarsäure und 3,4-Dimethoxyzimtsäure; cis-4,5-Dihydroxy-1-methyl-3-(3',4'-dihydroxyphenyl)indan, trans-4,5-Dihydroxy-1-methyl-3-(3',4'-dihydroxyphenyl)indan und Gemischen davon besteht.

11. Bitter-Verbindungs-Isolat gemäß Anspruch 10, wobei das mindestens eine Chinid, verestert mit einer Säure, welche aus der Gruppe ausgewählt ist, die aus p-Cumarsäure und 3,4-Dimethoxyzimtsäure besteht, ferner verestert ist mit einer Säure, welche aus der Gruppe ausgewählt ist, die aus Kaffeesäure und Ferulasäure besteht.

12. Verwendung eines Bitter-Verbindungs-Isolats zum Verbessern des Geschmacks eines Nahrungsmittels oder eines Getränkeprodukts, wobei das Bitter-Verbindungs-Isolat mindestens eine Verbindung enthält, welche aus der Gruppe ausgewählt ist, die aus 3-O-Caffeoyl-γ-chinid, 4-O-Caffeoyl-γ-chinid, 5-O-Caffeoyl-epi-δ-chinid, 5-O-Caffeoyl-muco-γ-chinid, 3-O-Feruloyl-γ-chinid, 4-O-Feruloyl-γ-chinid, 3,4-O-Dicaffeoyl-γ-chinid, 4-O-Caffeoyl-muco-γ-chinid, 3,5-O-Dicaffeoyl-epi-δ-chinid, 4,5-O-Dicaffeoyl-muco-γ-chinid, 5-O-Feruloyl-muco-γ-chinid, 4-O-Feruloyl-muco-γ-chinid, 5-O-Feruloyl-epi-δ-chinid, 3,4-O-Diferuloyl-γ-chinid, 3,5-O-Diferuloyl-epi-δ-chinid, 4,5-O-Diferuloyl-muco-γ-chinid; Chinid, verestert mit mindestens einer Säure, welche aus der Gruppe ausgewählt ist, die aus Kaffeesäure, Ferulasäure, p-Cumarsäure und 3,4-Dimethoxyzimtsäure; cis-5,6-Dihydroxy-1-methyl-3-(3',4'-dihydroxyphenyl)indan, trans-5,6-Dihydroxy-1-methyl-3-(3',4'-dihydroxyphenyl)indan, cis-4,5-Dihydroxy-1-methyl-3-(3',4'-dihydroxyphenyl)indan, trans-4,5-Dihydroxy-1-methyl-3-(3',4'-dihydroxyphenyl)indan und Gemischen davon besteht.

13. Verwendung gemäß Anspruch 12, wobei das Nahrungsmittel oder Getränkeprodukt aus der Gruppe ausgewählt ist, welche aus löslichem Kaffee, entkoffeiniertem Kaffee, geröstetem und gemahlenem Kaffee, trinkfertigem Kaffee, Kaffeekonzentraten, sahnehaltigem Kaffee mit oder ohne zusätzliche Geschmacksstoffe, Schokoladenmilch, Schokolade, Eiscreme und Süßigkeiten besteht.

## Revendications

1. Procédé pour améliorer la saveur d'un produit alimentaire ou à boire, **caractérisé en ce que** le procédé comprend les étapes consistant à :
a. mettre en contact une composition de composés amers, ladite composition de composés amers comprenant au moins un composé amer choisi dans le groupe constitué par les quinides, les phénylindanes et mélanges de ceux-ci, avec un adsorbant pour adsorber ledit au moins un composé amer de la composition de composés amers, ledit adsorbant étant choisi dans le groupe constitué par les polymères naturels contenant des groupes amides, les polymères synthétiques contenant des groupes amides et des combinaisons de ceux-ci ;
b. désorber ledit au moins un composé amer de l'adsorbant avec un solvant pour obtenir un isolat de composé amer ; et
c. ajouter l'isolat de composé amer à un produit alimentaire ou à boire pour améliorer la saveur de celui-ci.

2. Procédé selon la revendication 1, dans lequel la composition de composés amers est dérivée d'au moins un acide choisi dans le groupe constitué par l'acide chlorogénique torréfié, l'acide caféique torréfié et les mélanges de ceux-ci, dérivés d'une source d'acide naturel ou synthétique.

3. Procédé selon la revendication 1, dans lequel la composition de composés amers contient du café boisson, de l'extrait de café ou des mélanges de ceux-ci.

4. Procédé selon la revendication 2, dans lequel la source d'acide naturel est un élément végétal contenant un acide choisi dans le groupe constitué par l'acide chlorogénique, l'acide caféique et des mélanges de ceux-ci.

5. Procédé selon la revendication 2, dans lequel la source d'acide naturel est choisie dans le groupe comprenant les grains de café, les fruits du caféier mûrs, les feuilles de patates douces, les pommes de terre, les pommes, les ananas, les cerises, les pêches et des combinaisons de ceux-ci.

6. Procédé selon la revendication 1, dans lequel l'adsorbant est choisi dans le groupe constitué par le polyamide, le polyvinyle pyrolidone, le polyvinyl polypyrrolidone, la caséine, la zéine et des combinaisons de ceux-ci.

7. Procédé selon la revendication 1, dans lequel le solvant est un solvant de qualité alimentaire.

8. Procédé selon la revendication 1, dans lequel le solvant est choisi dans le groupe constitué par l'éthanol, l'acétone, l'acétate d'éthyle et des mélanges de ceux-ci.

9. Procédé selon la revendication 1, dans lequel l'isolat du composé amer contient au moins un composé choisi dans le groupe constitué par 3-O-cafféoyl-γ-quinide, 4-O-cafféoyl-γ-quinide, 5-O-cafféoyl-épi-δ-quinide, 5-O-cafféoyl-muco-γ-quinide, 3-O-féruloyl-γ-quinide, 4-O-féruloyl-y-quinide, 3,4-O-dicafféoyl-γ-quinide, 4-O-cafféoyl-muco-γ-quinide, 3,5-O-dicafféoyl-épi-δ-quinide, 4,5-O-dicafféoyl-muco-γ-quinide, 5-O-féruloyl-muco-γ-quinide, 4-O-féruloyl-muco-γ-quinide, 5-O-feruloyl-épi-δ-quinide, 3,4-O-diféruoyl-γ-quinide, 3,5-O-diféruoyl-épi-δ-quinide, 4,5-O-diféruloyl-muco-γ-quinide ; la quinide estérifiée avec un ou plusieurs parmi l'acide caféique, l'acide férulique, l'acide p-coumarique, l'acide 3,4-diméthoxycinnamique ; le cis-5,6-dihydroxy-1-méthyl-3-(3',4'-dihydroxyphényl)indane, le trans-5,6-dihydroxy-1-méthyl-3-(3',4'-dihydroxyphényl)indane, le cis-4,5-dihydroxy-1-méthyl-3-(3',4'-dihydroxyphényl)indane, le trans-4,5-dihydroxy-1-méthyl-3-(3',4'-dihydroxyphényl)indane, et des mélanges de ceux-ci.

10. Isolat de composé amer destiné à améliorer la saveur d'un produit alimentaire ou à boire, **caractérisé en ce qu'**il contient au moins un composé choisi dans le groupe constitué par 5-O-cafféoyl-épi-δ-quinide, 5-O-cafféoyl-muco-γ-quinide, 4-O-cafféoyl-muco-γ-quinide, 3,5-O-dicafféoyl-épi-δ-quinide, 4,5-O-dicafféoyl-muco-γ-quinide, 5-O-féruloyl-muco-γ-quinide, 4-O-féruloyl-muco-γ-quinide, 5-O-feruloyl-épi-δ-quinide, 3,5-O-diféruoyl-épi-δ-quinide, 4,5-O-diféruloyl-muco-y-quinide ; la quinide estérifiée avec un ou plusieurs acides choisis dans le groupe constitué par l'acide p-coumarique et l'acide 3,4-diméthoxycinnamique ; le cis-4,5-dihydroxy-1-méthyl-3-(3',4'-dihydroxyphényl)indane, le trans-4,5-dihydroxy-1-méthyl-3-(3',4'-dihydroxyphényl)indane, et des mélanges de ceux-ci.

11. Isolat de composé amer selon la revendication 10, dans lequel ladite au moins une quinide estérifiée avec un acide choisi dans le groupe constitué par l'acide p-coumarique et l'acide 3,4-diméthoxycinnamique est en outre estérifiée avec un acide choisi dans le groupe constitué par l'acide caféique et l'acide férulique.

12. Utilisation d'un isolat de composé amer destiné à améliorer la saveur d'un produit alimentaire ou à boire, dans lequel ledit isolat de composé amer contient au moins un composé choisi dans le groupe constitué par 3-O-cafféoyl-γ-quinide, 4-O-cafféoyl-γ-quinide, 5-O-cafféoyl-épi-δ-quinide, 5-O-cafféoyl-muco-γ-quinide, 3-O-féruloyl-γ-quinide, 4-O-féruloyl-γ-quinide, 3,4-O-dicafféoyl-γ-quinide, 4-O-cafféoyl-muco-γ-quinide, 3,5-O-dicafféoyl-épi-δ-quinide, 4,5-O-dicafféoyl-muco-γ-quinide, 5-O-féruloyl-muco-γ-quinide, 4-O-feruloyl-muco-γ-quinide, 5-O-féruloyl-épi-δ-quinide, 3,4-O-diféruoyl-γ-quinide, 3,5-O-diféruoyl-épi-δ-quinide, 4,5-O-diféruloyl-muco-γ-quinide ; la quinide estérifiée avec au moins un acide choisi dans le groupe constitué par l'acide caféique, l'acide férulique, l'acide p-coumarique, et l'acide 3,4-diméthoxycinnamique ; le cis-5,6-dihydroxy-1-méthyl-3-(3',4'-dihydroxyphényl)indane, le trans-5,6-dihydroxy-1-méthyl-3-(3',4'-dihydroxyphényl)indane, le cis-4,5-dihydroxy-1-méthyl-3-(3',4'-dihydroxyphényl)indane, le trans-4,5-dihydroxy-1-méthyl-3-(3',4'-dihydroxyphényl)indane, et des mélanges de ceux-ci.

13. Utilisation selon la revendication 12, dans laquelle ledit produit alimentaire ou à boire est choisi dans le groupe constitué par le café instantané, le café décaféiné, le café torréfié et moulu, le café prêt à boire, les concentrés de café, le café crémeux avec ou sans arômes supplémentaires, le chocolat au lait, le chocolat, la crème glacée et les bonbons.
